# EUROPÄISCHE PATENTSCHRIFT

(11) **EP 0 958 956 B1**
(45) Veröffentlichungstag und Bekanntmachung des Hinweises auf die Patenterteilung: **21.11.2001**
(21) Anmeldenummer: 98109399.0
(22) Anmeldetag: 23.05.1998
(51) Int. Cl.: B60K 15/05

(54) **Fernentriegelung für eine Tankeinfuellstutzen-Karosserieklappe für Personenkraftfahrzeuge**
Remote release for a tank filler spout inlet cover for passenger cars
Déverrouillage télécommandé pour un volet d'obturation pour trappe de remplissage du réservoir pour voitures particulières

(43) Veröffentlichungstag der Anmeldung: 24.11.1999
(73) Patentinhaber: Ford Global Technologies, Inc., A subsidiary of Ford Motor Company, Dearborn, Michigan 48126 (US)
(72) Erfinder: Janssen, Heinz G., 50858 Koeln (DE)
(74) Vertreter: Messulam, Alec Moses

(56) Entgegenhaltungen:
- EP-A- 0 010 005
- DE-A- 2 533 104
- US-A- 4 030 322
- PATENT ABSTRACTS OF JAPAN vol. 008, no. 108 (M-297), 19. Mai 1984 (1984-05-19) & JP 59 018023 A (NISSAN JIDOSHA KK), 30. Januar 1984 (1984-01-30)

## Beschreibung

Die Erfindung bezieht sich auf eine Fernentriegelung für eine Tankeinfüllstutzen-Karosserieklappe für Personenkraftfahrzeuge der im Oberbegriff des Patentanspruches 1 erläuterten Art.

Aus der DE 25 33 104 A1 ist ein Tankverschluß für Personenkraftwagen mit einer Fernentriegelung bekannt, bei der ein federbelasteter Riegelbolzen über einen Elektromagneten außer Eingriff mit einem Verschlußteil an einer Karosserieklappe gebracht werden kann.

Bei dem bekannten Tankverschluß für Personenkraftwagen kann der Elektromagnet unmittelbar auf einer Grundplatte angeordnet werden, die in unmittelbarer Nachbarschaft der den Tankeinfüllstutzen aufnehmenden Karosseriemulde angeordnet werden kann.

Bei dieser bekannten Tankeinfüllstutzen-Karosserieklappe mit Fernentriegelung muß somit der Bereich unmittelbar benachbart der Karosseriemulde, die den Tankeinfüllstutzen aufnimmt, vom Karosserieinnenraum her zugänglich sein und es muß eine entsprechende Befestigungsmöglichkeit für die Grundplatte, auf der der Elektromagnet angeordnet ist, gegeben sein.

Bei einem Personenkraftfahrzeug in sportlicher Coupébauweise kann es infolge des kurzen hinteren Karosserieüberhanges und der aus Gründen der Tanklage erforderlichen Anordnung des Tankeinfüllstutzens zu der Schwierigkeit kommen, daß der Bereich unmittelbar benachbart der Karosseriemulde des Tankeinfüllstutzens nicht ohne weiteres zur Montage einer Grundplatte mit einem Elektromagneten und den Riegelbolzen zugänglich ist.

Die Aufgabe der Erfindung ist es daher, eine Baugruppe für eine Tankeinfüllstutzen-Karosserieklappe mit Fernentriegelung zu schaffen, die auch bei schwierigen Platzverhältnissen das Einsetzen des mit der Karosserieklappe zusammenwirkenden Riegelbolzens und ein Montieren der Grundplatte in gut zugänglicher Lage ermöglicht.

Gemäß der Erfindung wird diese Aufgabe gelöst, indem eine Tankeinfüllstutzen-Karosserieklappe der im Oberbegriff des Patentanspruches 1 erläuterten Art, die im Kennzeichenteil des Patentanspruches 1 aufgezeigten Merkmale aufweist.

Dadurch, daß der Elektromagnet und der Riegelbolzen in den Seitenschenkeln eines U-förmigen Kunststoffbauteiles angeordnet sind und, gemäß Anspruch 2 der Anker des Elektromagneten über ein Hebelgestänge, das in der Basis des U-förmigen Kunststoffbauteiles gelagert ist, auf den Riegelbolzen einwirkt, wird eine U-förmige Baugruppe geschaffen, bei der sich der Riegelbolzen über eine Dichtung abgestützt in die Karosseriemulde des Tankeinfüllstutzens erstrecken und diese Baugruppe mit ihrer vom einen Seitenschenkel gebildeten Grundplatte an einem Innenblech der Karosserie in montagegünstiger Lage befestigt werden kann.

Im Patentanspruch 3 ist eine weitere mögliche Ausführungsform erläutert, die darin besteht, daß anstelle des Hebelgestänges ein in einem U-förmigen Bogen verlegter Bowdenzug eingesetzt wird.

Im Anspruch 4 wird eine weitere Hebelanordnung aufgezeigt, die eine Entriegelung bei einer Störung im elektrischen System von Hand aus ermöglicht.

Die Erfindung wird anhand der beiliegenden Zeichnungen näher erläutert. Es zeigt:
- Fig. 1: eine perspektivische Ansicht der erfindungsgemäßen U-förmigen Baugruppe des Riegelbolzens mit dem Elektromagneten und dem Übertragungsgestänge;
- Fig. 2: eine vertikale Schnittdarstellung durch den hinteren Bereich einer Kraftfahrzeugkarosserie mit der angedeuteten Karosseriemulde für den Tankeinfüllstutzen und der Karosserieklappe sowie der erfindungsgemäßen Baugruppe in eingebautem Zustand, wobei in gestrichelten Linien die Montagemöglichkeit aufgezeigt ist und

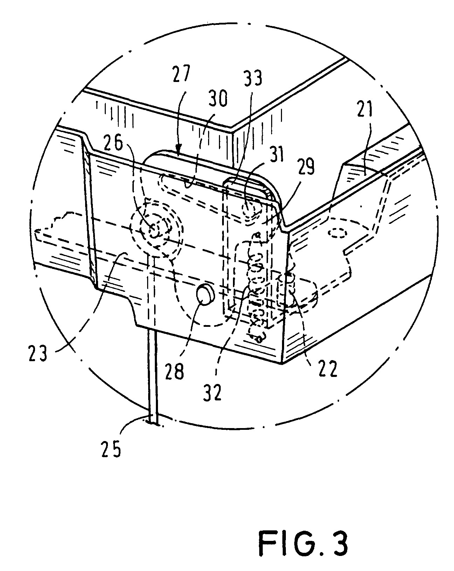

- Fig. 3: eine vergrößerte Darstellung der Notentriegelung im Kreis III in Fig. 1.

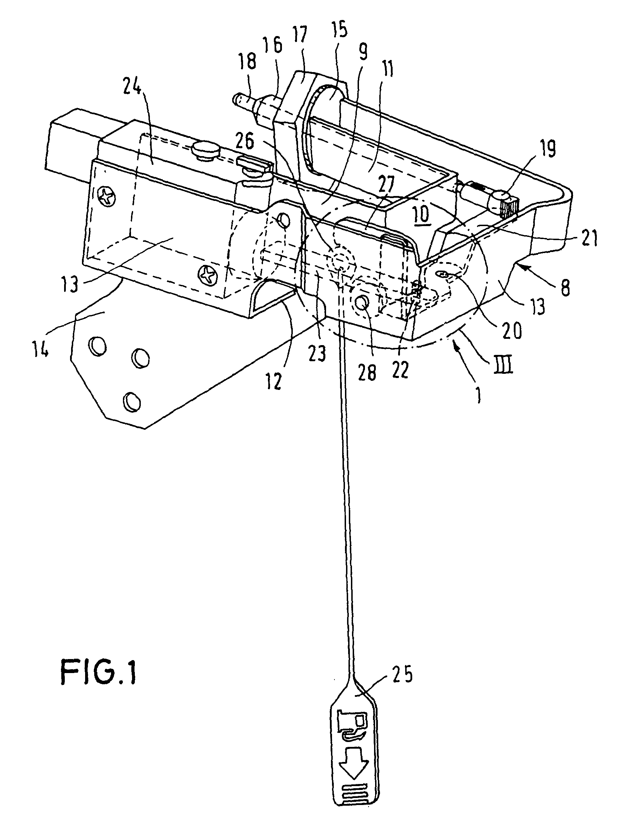

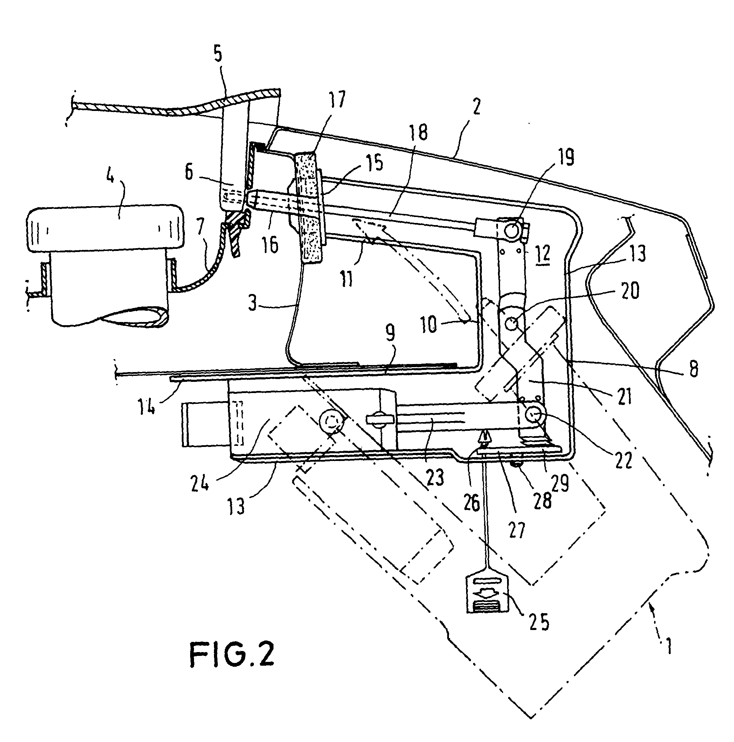

Wie aus den Figuren 1 und 2 zu ersehen ist, ist die erfindungsgemäße U-förmige Baugruppe 1 vorgesehen, um die innerhalb einer Kraftfahrzeugkarosserie 2 vorgesehene Karosseriemulde 3 für einen Tankeinfüllstutzen 4 und die diese Mulde abdekkende Tankklappe 5 über deren Verschlußteil 6 elektromagnetisch fernentriegeln zu können. In die Karosseriemulde 3 ist ein Kunststoffgehäuse 7 eingesetzt, in dem in bekannter Weise die aus Kunststoff bestehende Tankklappe 5 schwenkbar gelagert ist.

Die U-förmige Baugruppe 1 besteht hierbei aus einem U-förmigen Kunststoffbauteil 8 mit nach oben offenen U-förmigem Querschnitt.

Das Kunststoffbauteil 8 bildet auf diese Weise einen inneren Seitenschenkel 9, eine Basis 10 und einen äußeren Seitenschenkel 11. An diese Seitenwandungen 9, 10 und 11 schließt sich die Basis 12 dem Kunststoffbauteil 8 mit der entsprechenden umlaufenden äußeren Seitenwand 13 an.

Der innere Seitenschenkel 9 ist hierbei nach unten zu einer Montage-Grundplatte 14 verlängert und der Seitenschenkel 11 ist durch eine Endplatte 15 mit einer Führungshülse 16 und anliegenden Dichtung 17 abgeschlossen.

Durch die Endplatte 15 mit der Führungshülse 16 und die Dichtung 17 erstreckt sich ein Riegelbolzen 18, dessen inneres Ende über eine Gelenkverbindung 19 mit einem in der Basis 12 des Kunststoffbauteiles 8 um einen Drehpunkt 20 gelagerten Hebelarm 21 verbunden ist, dessen anderes Ende über eine Gelenkverbindung 22 mit einer Ankerstange 23 eines Elektromagneten 24 verbunden ist, der über entsprechende Schrauben in dem benachbart der Montage-Grundplatte 14 liegenden U-förmigen Querschnitt des Kunststoffbauteiles 8 aufgenommen wird.

Eine Notentriegelung in Form einer Zughandhabe 25 greift an einem Bolzen 26 eines zweiarmigen Hebels 27 an, der um einen Bolzen 28 in der äußeren Seitenwand 13 im Kunststoffbauteil 8 drehbar gelagert ist und dessen anderer Hebelarm 29 über eine Schlitz/Bolzen-Verbindung 30/31 auf ein rechtwinkelig nach oben abgewinkeltes Ende 33 des Hebelarmes 21 in Entriegelungsrichtung einwirken kann, wenn z.B. der Elektromagnet durch eine mechanische Störung oder durch eine Stromunterbrechung nicht in der Lage ist, die Entriegelung zu bewerkstelligen.

Eine Rückholfeder 32 bewirkt, wenn die Notentriegelung betätigt wurde, daß der Hebel 27 wieder in Normalstellung zurückgestellt wird. Bei einer normalen Betätigung über den Elektromagneten bleibt der Hebel 27 infolge der Schlitz/Bolzen-Verbindung 30/31 unbewegt.

Obwohl die erfindungsgemäße U-förmige Baugruppe in Form eines Kunststoffbauteiles mit einer entsprechenden Hebelanordnung gezeigt und beschrieben wurde, ist es dem Fachmann selbstverständlich, daß er in ähnlicher Weise eine in schwierigen Platzverhältnissen leicht zu montierende Baugruppe schaffen kann, wenn er die Ankerstange des Elektromagneten auf die Seele einer Bowdenzuganordnung einwirken läßt, deren Mantel durch ein entsprechendes Kunststoffbauteil U-förmig gebogen gehalten wird, so daß das Ende der Seele, die den Riegelbolzen bilden kann, in die Karosseriemulde des Tankeinfüllstutzens ragt und dort mit dem Verschlußteil der Karosserieklappe zusammenwirken kann.

## Patentansprüche

1. Fernentriegelung für eine Tankeinfüllstutzen-Karosserieklappe, bei der ein Riegelbolzen (18) über eine Feder in und über einen Elektromagneten (24) außer Eingriff mit einem Verschlussteil (6) an der Karosserieklappe (5) bringbar ist,
**dadurch gekennzeichnet, dass** der Elektromagnet (24) und der Riegelbolzen (18) in den Seitenschenkeln (9 und 11) eines im Querschnitt U-förmigen, U-förmigen Kunststoffbauteiles (8) angeordnet sind und die Ankerstange (23) des Elektromagneten (24) mit dem Riegelbolzen (18) verbunden ist.

2. Fernentriegelung nach Anspruch 1,
**dadurch gekennzeichnet, dass** die Verbindung zwischen Ankerstange (23) und Riegelbolzen (18) über einen zweiarmigen Hebelarm (21), der in der Basis (12) des U-förmigen Kunststoffbauteiles (8) um einen Drehpunkt (20) verschwenkbar gelagert ist, erfolgt.

3. Fernentriegelung nach Anspruch 1,
**dadurch gekennzeichnet, dass** die Verbindung zwischen Ankerstange (23) und Riegelbolzen (18) über die Seele einer Bowdenzuganordnung erfolgt, deren eines Ende mit der Ankerstange (23) des Elektromagneten (24) und deren anderes Ende mit dem Riegelbolzen (18) verbunden ist.

4. Fernentriegelung nach Anspruch 2 oder 3,
**dadurch gekennzeichnet, dass** eine Zughandhabe (25) auf einen Bolzen (26) eines um einen Schwenkbolzen (28) verschwenkbaren zweiarmigen Hebel (27) einwirkt, dessen anderer Hebelarm (29) auf das Hebelgestänge (33/21) bzw. die Bowdenzuganordnung in Richtung Entriegelung einwirkt.

## Claims

1. Remote release for a tank filler spout inlet cover, wherein a locking bolt (18) can be brought via a spring into engagement and via an electromagnet (24) out of engagement with the closure component (6) on the inlet cover (5),
**characterised in that** the electromagnet (24) and the locking bolt (18) are positioned in the sides (9 and 11) of a U-shaped synthetic material component (8), U-shaped in the cross-section, and the armature bar (23) of the electromagnet (24) is connected with the locking bolt (18).

2. Remote release according to Claim 1,
**characterised in that** the connection between armature bar (23) and locking bolt (18) occurs via a two-armed lever arm (21), which is positioned in a swivelling way around a pivot point (20) in the base of the U-shaped synthetic material component (8).

3. Remote release according to Claim 1,
**characterised in that** the connection between armature bar (23) and locking bolt (18) occurs via the core of a Bowden cable arrangement, one end of which is connected with the armature bar (23) of the electromagnet (24) and the other end of which is connected with the locking bolt (18).

4. Remote release according to Claim 2 or 3,
**characterised in that** a pull manipulation device (25) acts upon a bolt (26) of a two-armed lever (27) which can be swivelled around a swivel bolt (28), wherein the other lever arm (29) thereof acts upon the leverage (33 / 21) / the Bowden cable arrangement in the direction of release.

## Revendications

1. Déverrouillage télécommandé pour un volet d'obturation d'un orifice de remplissage de réservoir dans le cas duquel un pêne (18) peut être mis en prise avec un élément de fermeture (6) sur le volet d'obturation (5) à l'aide d'un ressort et déclenché de cet élément de fermeture à l'aide d'un électroaimant (24), **caractérisé en ce que** l'électroaimant (24) et le pêne (18) sont disposés dans les branches latérales (9 et 11) d'un élément en matière plastique en U (8) de section transversale en U, et **en ce que** le noyau (23) de l'électroaimant (24) est reliée au pêne (18).

2. Déverrouillage télécommandé selon la revendication 1, **caractérisé en ce que** la liaison entre le noyau (23) et le pêne (18) est réalisée par le biais d'un levier à deux bras (21) qui est monté dans la base (12) de l'élément en matière plastique en U (8) de façon à pivoter autour d'un pivot (20).

3. Déverrouillage télécommandé selon la revendication 1, **caractérisé en ce que** la liaison entre le noyau (23) et le pêne (18) est réalisée par l'âme d'un câble Bowden dont l'une des extrémités est reliée au noyau (23) de l'électroaimant (24) et l'autre extrémité, au pêne (18).

4. Déverrouillage télécommandé selon la revendication 2 ou 3, **caractérisé en ce qu'**une poignée de traction (25) agit sur un axe (26) d'un levier à deux bras (27) pouvant pivoter autour d'un axe de pivotement (28), dont l'autre bras de levier (29) agit sur la tringlerie à leviers (33/21) ou le câble Bowden de façon à provoquer le déverrouillage.
